# FASCICULE DE BREVET EUROPEEN

(11) **EP 0 063 517 B1**
(45) Date de publication et mention de la délivrance du brevet: **18.09.1985**
(21) Numéro de dépôt: 82400615.9
(22) Date de dépôt: 02.04.1982
(51) Int. Cl.: G01S 3/80, G01S 5/18, G01S 11/00

(54) **Système de télémétrie passive**
Passives Entfernungsmesssystem
Passive range-finding system

(30) Priorité: 15.04.1981 FR 8107547
(43) Date de publication de la demande: 27.10.1982
(73) Titulaire: THOMSON-CSF, 75008 Paris (FR)
(72) Inventeur: Orieux, François, F-75360 Paris Cedex 08 (FR); Bertheas, Jean, F-75360 Paris Cedex 08 (FR)
(74) Mandataire: Desperrier, Jean-Louis

## Description

La présente invention est un système de télémétrie acoustique passive pouvant fournir la direction et la distance d'une source, appelée bruiteur, émettant des signaux sonores. Ces systèmes sont utilisés principalement par les sous-marins et permettent après détection d'un ou plusieurs bruiteurs de les suivre. Ces informations permettent ensuite la commande d'un système d'armes.

Il est connu de déterminer la direction et la distance d'un bruiteur, en utilisant trois récepteurs alignés, généralement équidistants. Un tel système est décrit dans le brevet US-3 978 445.

Les signaux reçus par les récepteurs extrêmes sont appliqués chacun à un circuit de corrélation, qui reçoit par ailleurs le signal du récepteur central. Les deux signaux d'intercorrélation passent chacun par un maximum temporel, qui fournit la valeur algébrique du retard des deux signaux reçus par les récepteurs extrêmes par rapport au signal reçu par le récepteur central.

Un circuit de calcul permet de déterminer à partir de ces valeurs de retard la direction et la distance du bruiteur.

La précision obtenue pour les paramètres mesurés dépend du rapport entre le signal émis par un bruiteur, dans une certaine bande de fréquence, et la puissance de bruit autre que le signal utile, dans cette même bande de fréquence. Ce rapport est appelé rapport signal sur bruit.

Il est connu que pour augmenter le rapport signal sur bruit (S/B) en télémétrie passive acoustique, d'utiliser comme récepteurs un ensemble de capteurs ou hydrophones formant une antenne. Le rapport S/B en sortie de l'antenne se trouve ainsi augmenté du gain d'antenne par rapport au rapport S/B à l'entrée de chaque hydrophone.

Par exemple, dans certains systèmes commercialisés, chaque ensemble récepteur est constitué d'antennes, comportant plusieurs colonnes et plusieurs hydrophones chacune. Sur chaque côté du sous-marin, sont ainsi disposés trois ensembles formant antenne couvrant deux secteurs angulaires de 120°, à bâbord et à tribord. Chaque antenne permet de former plusieurs faisceaux directifs.

Dans les sous-marins munis d'un système de télémétrie passive, suivant l'art antérieur, est monté généralement en plus, un système d'écoute passive. Les signaux d'écoute passive sont traités pour former des voies angulaires d'une largeur angulaire de quelques degrés et c'est le système d'écoute passive, qui fournit dans ce cas la direction du bruiteur.

La nécessité de former des voies à la fois pour le système de télémétrie et pour celui d'écoute passive, présente l'inconvénient d'être d'une grande complexité.

Le système de télémétrie selon l'invention, remédie à cet inconvénient par le fait qu'il ne comporte pas de formation de voies à partir des signaux fournis par les récepteurs du système de télémétrie. La diminution du rapport sur bruit, qui en résulte est compensée au moins partiellement, suivant l'invention, par l'utilisation en combinaison des signaux de ces récepteurs et de ceux fournis par le système d'écoute passive, en utilisant les informations de voies préformées directives d'un système d'écoute passive.

Pour cela le système de télémétrie passive par acoustique sous-marine pour des bâtiments navals selon l'invention comprend au moins une base munie de trois récepteurs alignés pour recevoir des signaux émis par un bruiteur à localiser situé à une distance D dans un gisement a, des moyens pour mesurer le retard Δt₁₂ du signal reçu par le premier récepteur par rapport à celui reçu par le deuxième récepteur et le retard àt₂₃ du signal reçu par le deuxième récepteur par rapport à celui reçu par le troisième récepteur, et des moyens pour calculer à partir des retards t₁₂ et t₂₃ les valeurs de a et de D, et il est principalement caractérisé en ce qu'il comprend en outre un système d'écoute passive à voies préformées directives, des moyens pour sélectionner la voie de ce système d'écoute passive la plus proche de la direction du bruiteur, et des moyens pour mesurer les retards τ₁, τ₂ τ₃ entre d'une part le signal de voie ainsi sélectionné et respectivement les signaux des trois récepteurs ; les moyens de calcul de a et D comprenant des moyens pour calculer les retards Δt₁₂ = τ₁ - τ₂ et Δt₂₃ = τ₂ - τ₃.

D'autres caractéristiques ressortent des revendications dépendantes et les détails et avantages ressortiront de la description qui suit, illustrée par les figures qui représentent :
figure 1, le principe d'un télémètre, suivant fart antérieur;
figure 2, le bloc diagramme, montrant les circuits de traitement de télémétrie, suivant cet art antérieur ;
figure 3, le bloc diagramme, montrant le système de télémétrie, suivant l'invention ;
figure 4, l'implantation sur un sous-marin de ce système de télémétrie ;
figure 5, des signaux de corrélation pour deux bruiteurs ;
figures 6 et 7, les circuits de traitement en numérique, du télémètre suivant l'invention ;
figure 8, une variante des circuits de traitement par lignes à retard et dispositif à transfert de charge.

Les systèmes de télémétrie passive existent depuis les années 50 et sont largement répandus dans le domaine de l'acoustique sous-marine. Aux Etats-Unis par exemple, la Société Sperry a développé depuis 1956, la fabrication de systèmes de télémétrie passive destinés aux sous-marins et appelés : « Micro- puffs •.

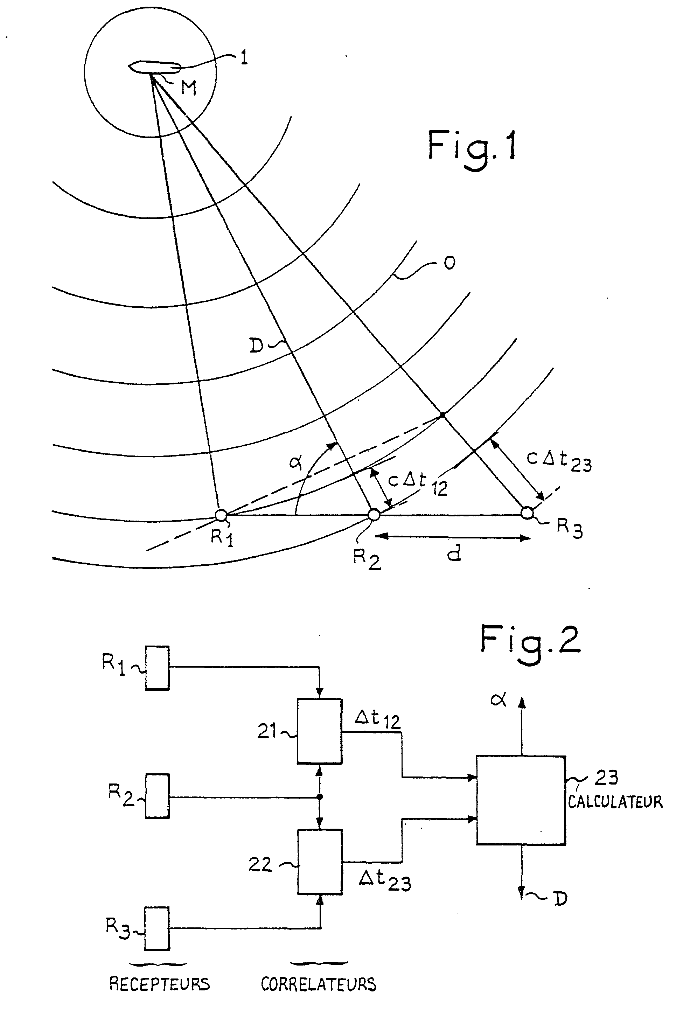

La figure 1 représente un diagramme explicatif du principe de fonctionnement. On considère trois récepteurs Rᵢ, R₂ et R₃ alignés. Avantageusement, ces trois récepteurs sont équidistants de d mais ils peuvent être non équidistants, il suffit que les distances soient connues.

Soit un but 1 situé dans une direction repérée par un angle a, mesuré par rapport à l'alignement des récepteurs, ce but 1 constitue une source de bruit qui rayonne dans toutes les directions, et qui est figuré par une série d'ondes circulaires concentriques telle que O. Avec la direction considérée, le front d'onde arrive sur le récepteur R₁ en premier, puis sur le récepteur R₂ avec un retard Δt₁₂ par rapport à l'instant d'arrivée sur R₁ et enfin sur le récepteur R₃ avec un retard Δt₂₃ par rapport à l'instant d'arrivée sur R₂.

On considère ce but 1 comme un point M, et l'on pose | R₂M | = D et soit a l'angle que fait la droite R₂M avec la droite R₁R₂R₃.

Ces différences de temps d'arrivée sur les récepteurs Δt₁₂, Δt₂₃ permettent d'obtenir la direction repérée par a et la distance D d'après les expressions suivantes obtenues en première approximation : 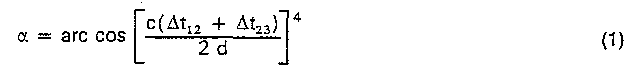 et 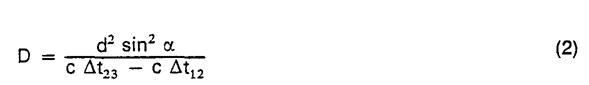 où c est la vitesse des ondes.

Pour calculer les valeurs de a et D, figure 2, on utilise deux circuits 21 et 22, comportant chacun un corrélateur et un circuit de mesure du temps, correspondant au maximum du signal d'intercorrélation. Ainsi le premier circuit, 21, reçoit les signaux des récepteurs R₁ et R₂ et fournit le temps de retard Δt₁₂. Le second circuit, 22, reçoit les signaux des récepteurs R₂ et R₃ et fournit le temps de retard Δt₂₃. Les valeurs de Δt₁₂ et Δt₂₃ sont appliquées au circuit de calcul 23, qui fournit, suivant les relations (1) et (2) les valeurs de a et de D.

Les erreurs sur l'angle a et sur la distance D dépendent de l'erreur 8t obtenue sur la mesure de la position temporelle de chaque maximum d'intercorrélation.

L'erreur 8t obtenue sur les maxima des fonctions d'intercorrélation dépend de la bande AF et du rapport signal sur bruit S/B suivant :

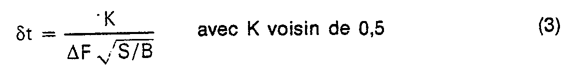

En acoustique sous-marine ce bruit dépend en particulier de l'état de la mer, du trafic maritime et du bruit propre du porteur.

Pour réduire le bruit par rapport à des récepteurs omnidirectionnels, il est connu de remplacer chacun des récepteurs R₁, R₂ et R₃ par un ensemble d'hydrophones, suivi d'une unité de formation de voies angulaires. La corrélation est effectuée entre les voies formées pour le même secteur angulaire, pour chacun des ensembles d'hydrophones.

Il est connu que dans ce cas, l'amélioration du rapport signal sur bruit est due au fait, que le bruit à considérer est celui du domaine angulaire d'une voie. Le rapport signal sur bruit est ainsi augmenté du « gain d'antenne ».

Suivant l'invention on utilise trois simples récepteurs, dont les signaux sont corrélés avec un signal de voie du système d'écoute passive, qui équipe le sous-marin.

Pour ce système d'écoute passive plusieurs faisceaux directifs sont formés à partir d'une antenne, de manière à obtenir une surveillance panoramique en gisement (angle dans un plan parallèle à la surface de la mer) dans plusieurs secteurs angulaires adjacents. A chaque faisceau directif correspond un signal de voie angulaire.

On utilise un signal de voie (pris en référence) fourni par le système d'écoute passive, pour le corréler avec les trois signaux reçus par les trois récepteurs, formant la base de télémétrie. Les écarts de temps d'arrivée Δt₁₂ et Δt₂₃ sont calculés à partir des positions temporelles τ₁, τ₂ et τ₃ des maxima des trois fonctions d'intercorrélation par les relations :

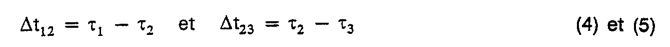

Si on considère l'intercorrélation de deux signaux dont les rapports signal sur bruit diffèrent de K décibels, le rapport signal sur bruit résultant en sortie d'intercorrélation est augmenté de K/2 décibels.

Ainsi, le rapport S/B au niveau des intercorrélations est amélioré par le fait que le signal de voie bénéficie du gain d'antenne du système d'écoute passive. De plus, on améliore la télémétrie en présence de plusieurs bruiteurs.

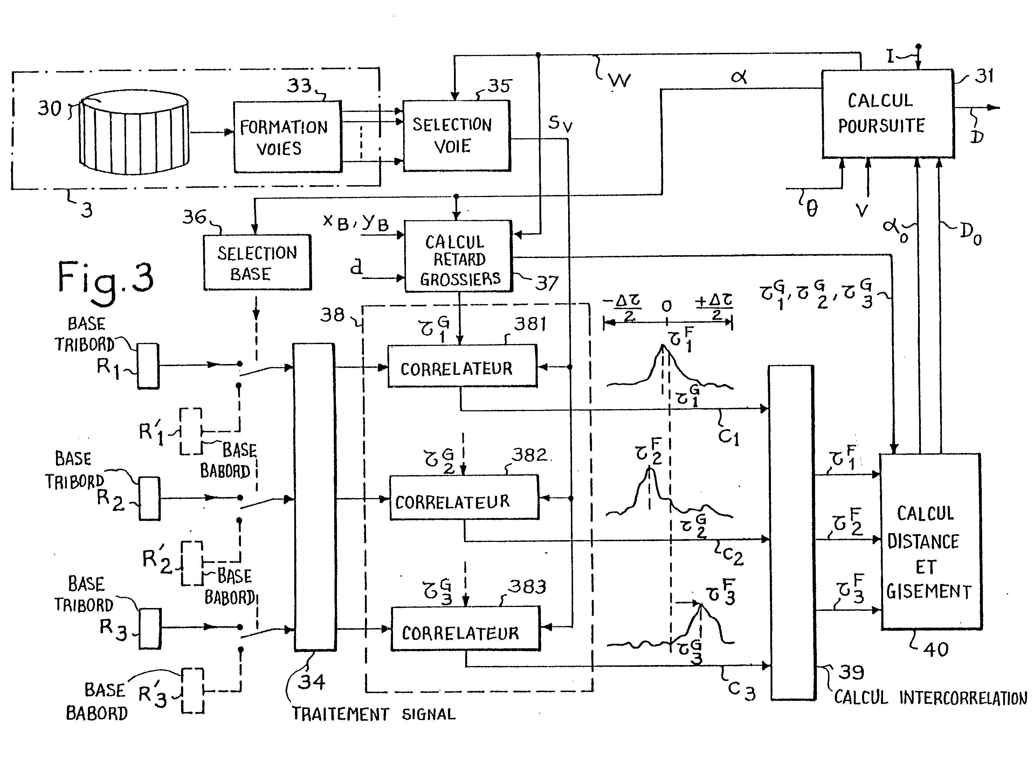

La figure 3 représente schématiquement le système de télémétrie passive selon l'invention.

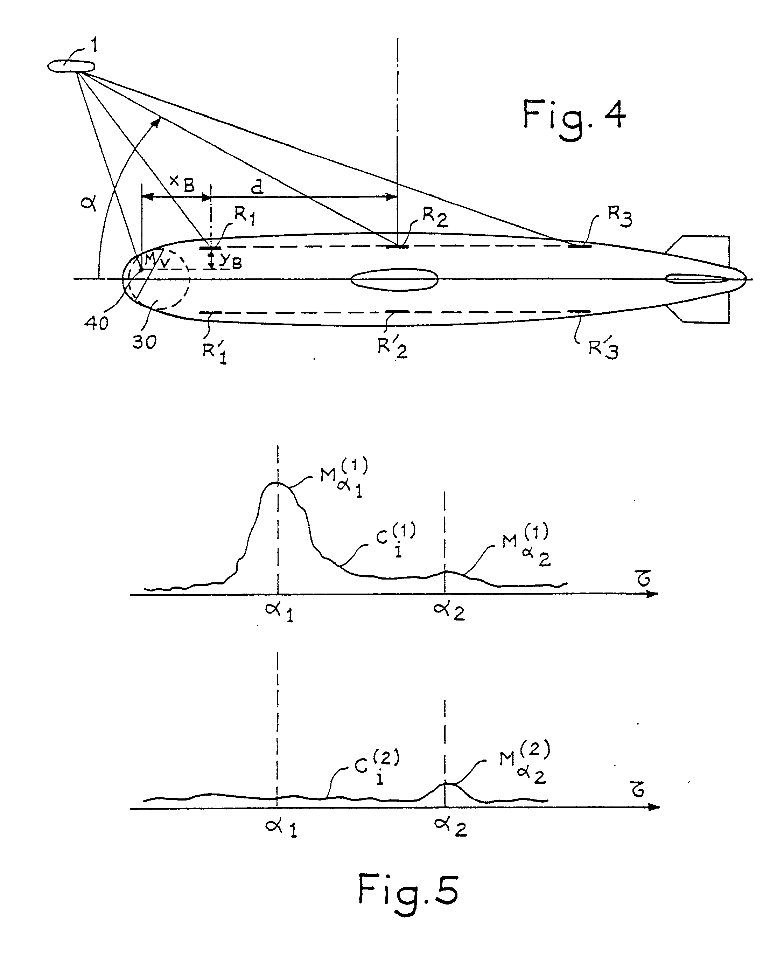

Ce système est par exemple monté sur un sous-marin comme indiqué par la figure 4. Deux bases de trois récepteurs alignés R'₁, R'₂, R'₃ et R₁, R'₂, R₃ sont montées de chaque côté, à bâbord et à tribord, sur la longueur maximum, de manière à obtenir une longueur de chaque base de télémétrie aussi grande que possible ; leur alignement est parallèle à l'axe du sous-marin porteur, et l'angle α est le gisement. Si les récepteurs sont équidistants, la longueur de chaque base est égale à 2d.

Sur la figure 4, on a représenté une antenne d'écoute passive 30 de forme cylindrique et située à l'avant du sous-marin.

Les systèmes de télémétrie permettent en général, d'effectuer la poursuite d'un ou plusieurs buts. Un calculateur de poursuite 31 fournit des données d'exploitation nécessaires à l'opérateur (figure 3). Ce calculateur de poursuite 31 reçoit les informations de cap O et de vitesse V du sous-marin.

Selon l'invention, le système de télémétrie proprement dit est utilisé en combinaison avec le système d'écoute passive. Ce dernier représenté par l'ensemble 3 comporte principalement l'antenne panoramique 30 par exemple cylindrique, et les circuits de formation de voies 33.

Les signaux reçus par les trois récepteurs R₁, R₂ et R₃ de la base de télémétrie tribord ou R'₁, R'₂ et R'₃ de la base de télémétrie bâbord sont amplifiés, filtrés dans la bande d'écoute du système d'écoute passive, et régulés par contrôle automatique de gain (CAG) dans l'ensemble de prétraitement 34.

Un circuit 35 permettant de sélectionner un signal de voie Sᵥ parmi l'ensemble des signaux de voies du système d'écoute passive est connecté en sortie des circuits de formation de voies 33. Ce circuit 35 reçoit du calculateur de poursuite, une adresse de voie W déterminée à partir du gisement a du but poursuivi.

Le gisement a du but est fourni par le calculateur de poursuite 31 à un circuit 36, qui commande le choix d'une des deux bases de télémétrie, bâbord ou tribord, suivant la valeur de a.

La valeur du gisement a est également fournie à un circuit 37 qui calcule les retards dits « grossiers τ₁^{G}, τ₂^{G}, τ₃^{G} à partir de la valeur de Sᵥ et des données géométriques des antennes. Ces retards estiment grossièrement les retards entre le signal de voie Sᵥ pour la direction a et les trois récepteurs de la base.

La formation des voies angulaires est obtenue par traitement des N signaux reçus par N colonnes, parmi les M colonnes formant l'antenne, avec N < M.

Des lignes à retard permettent d'annuler pour un angle de gisement a les avances de ces N signaux par rapport à un point de référence Mᵥ (figure 4). Ce point Mᵥ varie pour les différentes voies formées.

Si x_{B} et y_{B} sont les projections du vecteur MᵥR₁ sur des axes x et y, où l'axe x est parallèle à l'axe du sous-marin et l'axe y perpendiculaire à l'axe x et horizontal, et en se reportant à la figure 4, le retard τ₁^{G} entre le signal de R₁ est égal à x/cB cos a + y/cB sin a, où c est la vitesse du son dans l'eau.

Les valeurs x_{B} et y_{B} sont fonction également de l'angle α · τ₂^{G} et τ₃^{G} sont données par les relations :

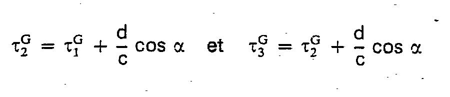

Le système comporte un ensemble 38 mettant en oeuvre le calcul des trois fonctions d'intercorrélation entre le signal de voie Sᵥ et chacun des trois signaux prétraités provenant des récepteurs R₁, R₂ et R₃ où R'₁ R'₂ et R'₃.

Sur la figure 3, on a représenté l'ensemble 38 comprenant trois dispositifs corrélateurs 381, 382, 383, recevant sur une entrée les signaux de sortie de l'ensemble de prétraitement 34 et sur l'autre entrée, le signal de voie Sᵥ sélectionné par le circuit 35. Les valeurs des retards « grossiers» τ₁^{G}, τ₂^{G} et τ₃^{G} sont introduites au niveau des corrélateurs, de manière à recaler les signaux autour de ces retards. Ainsi, les intercorrélations sont calculées dans une plage de retards, ± Δ/τ₂, plus faible correspondant à l'incertitude sur l'angle a et sur le site d'arrivée des rayons sonores, les différences entre τ₁^{G}, τ₂^{G} et τ₃^{G} n'intervenant plus.

Les trois fonctions d'intercorrélation C₁, C₂ et C₃, ainsi calculées autour des retards grossiers », sont envoyées dans un circuit de mesure 39 des retards « fins τ₁^{F}, τ₂^{F}, τ₃^{F}, du signal sur les trois récepteurs R₁, R₂ et R₃, par rapport au signal de voie Sᵥ. Ce circuit 39 met en œuvre la recherche de la position temporelle du maximum de chaque fonction d'intercorrélation.

Les retards τ₁, τ₂, τ₃ des signaux reçus par les 3 récepteurs par rapport au signal de voie Sᵥ sont alors donnés par τᵢ = τᵢ^{G} + τᵢ^{F}, où i = 1,2,3.

Les écarts de temps d'arrivée sur les trois récepteurs Δt₁₂ et Δt₂₃ sont donnés par les relations (4) et (5).

Par conséquent, le calculateur 40 qui reçoit les valeurs des retards « fins et des retards « grossiers », met en oeuvre le calcul d'un gisement αₒ et d'une distance Dₒ suivant les expressions (1) et (2).

Plusieurs valeurs du gisement αₒ et de la distance Dₒ sont ensuite transmises au calculateur de poursuite 31. Ce calculateur met en oeuvre le filtrage et l'intégration des données d'angle et de distance en tenant compte du cap et de la vitesse du porteur, par exemple en utilisant l'algorithme de Kalman. Il fournit en particulier le gisement α du bruiteur, calculé à partir de plusieurs valeurs de gisement, αₒ et la distance D à partir de plusieurs valeurs de Do.

L'opérateur initialise en I, la poursuite au niveau du calculateur de poursuite 31, à partir des indications du système d'écoute passive. Ainsi pour un bruiteur situé dans une voie dont la direction correspond à av, l'opérateur envoie un calculateur de poursuite 31, cette valeur aᵥ, qui constitue la valeur initiale de a.

Les systèmes d'écoute passive possèdent en général un grand gain d'antenne de manière à augmenter le rapport signal à bruit en sortie. En effet, de par leur destination, ces systèmes doivent être sensibles.

Il est connu que si l'on utilise pour former une voie, un nombre N de récepteurs distants d'au moins une demi-longueur d'onde X/2, correspondant à la fréquence centrale de la bande d'écoute, le gain d'antenne est de l'ordre de N.

D'après les considérations précédentes sur le rapport signal sur bruit du signal d'intercorrélation, on comprendra, que le système selon l'invention permet d'améliorer la précision des mesures d'angle et de direction en bénéficiant du gain d'antenne du système d'écoute passive.

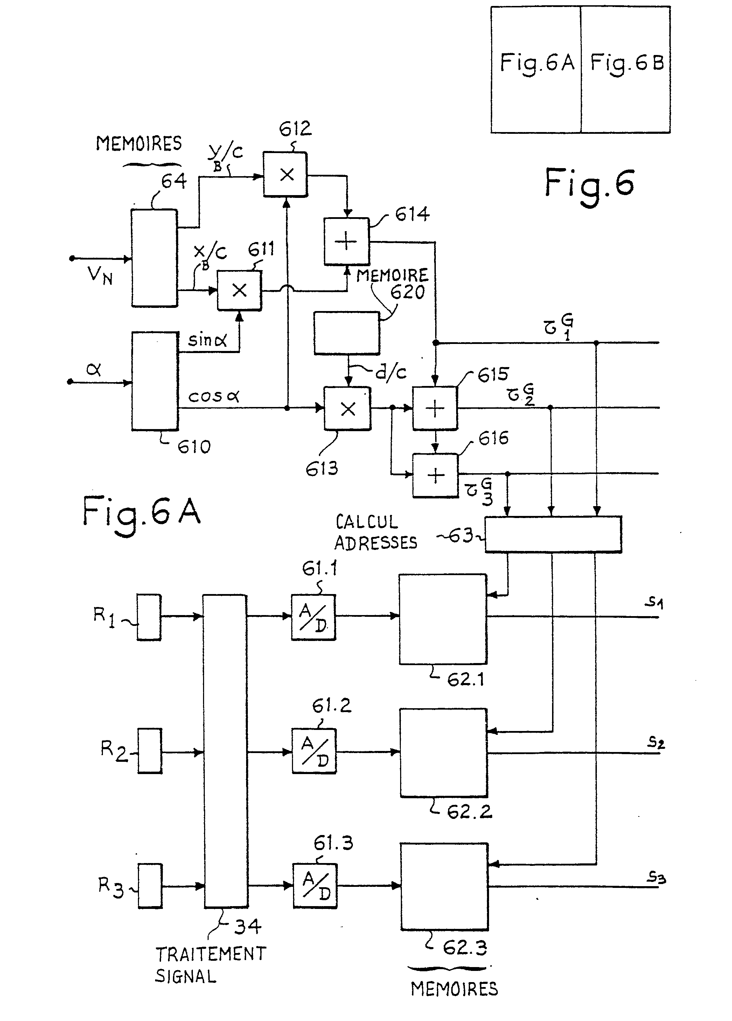

De plus, le système selon l'invention permet d'améliorer la télémétrie en présence de plusieurs bruiteurs. Sur la figure 5, on voit la fonction d'intercorrélation courbe Cᵢ⁽¹⁾, obtenue avec deux récepteurs peu directifs en présence de deux bruiteurs. IIs sont reçus avec des niveaux très différents Mα₁⁽¹⁾ ou Mα₂⁽¹⁾ et leurs directions α₁ et α₂ ne sont pas séparables par la directivité des deux récepteurs qui est large. On voit que le niveau résiduel du maximum d'intercorrélation Mα₁⁽¹⁾ relatif au bruiteur le plus fort masque le maximum d'intercorrélation du bruiteur le plus faible Mα₂⁽¹⁾.

En revanche, sur la figure 5. on a représenté également la fonction d'intercorrélation Cᵢ⁽²⁾ obtenue avec ces mêmes deux bruiteurs entre un signal de voie dont la directivité a une largeur angulaire inférieure à |α₁ - α₂ | et un récepteur peu directif. On voit que le niveau résiduel du maximum d'interconnexion relatif au bruiteur le plus fort Mα₁⁽²⁾ est atténué par la fonction de directivité de la voie axée dans la direction a₂, permettant d'améliorer la télémétrie du bruiteur plus faible.

L'antenne d'écoute passive est, par exemple, un cylindre de l'ordre de 2 mètres de diamètre, comportant sur son pourtour plusieurs dizaines de colonnes d'hydrophones équidistants, placées devant un réflecteur. Une voie est formée à partir de 24 colonnes et le gain d'antenne en gisement est de l'ordre de 17 décibels.

Chaque récepteur de télémétrie est formé, par exemple, d'une seule colonne d'hydrophones placée devant un réflecteur. On obtient un faisceau directif en site (angle dans le plan vertical) tandis qu'en gisement, l'angle d'ouverture est de l'ordre de 150°, ce qui conduit à un gain d'antenne en gisement d'environ 3 dB.

On a donc K de l'ordre de 14 décibels et d'après les enseignements précédents, le système de télémétrie proposé permet d'obtenir un rapport signal à bruit au niveau des intercorrélations supérieur à 7 dB, au rapport signal à bruit qui serait obtenu avec deux récepteurs formés d'une colonne d'hydrophones placée devant un réflecteur. Pour obtenir un rapport signal à bruit identique avec un système de télémétrie classique, chaque récepteur doit être une antenne dont le gain en gisement est de 7 dB, ce qui entraîne l'utilisation de plusieurs colonnes d'hydrophones et la'formation de voies directives.

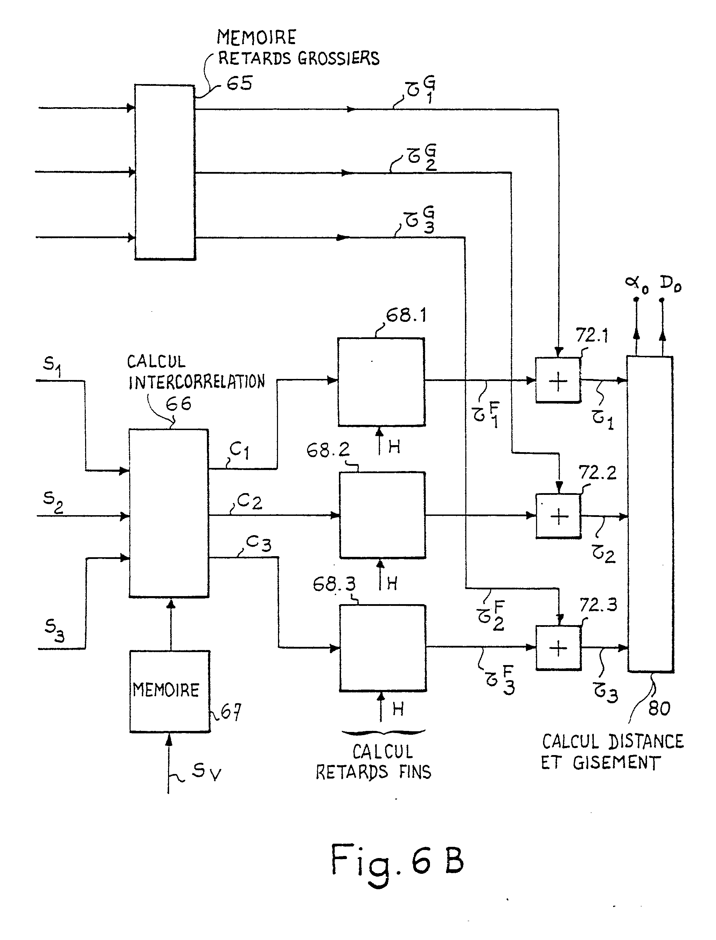

Une réalisation préférée de l'invention utilise les techniques numériques. La figure 6 représente un exemple de réalisation des circuits qui mettent en oeuvre les intercorrélations et la mesure des retards τ₁, τ₂, τ₃.

Le fonctionnement du système est sous contrôle d'un signal d'horloge H fourni par un générateur non représenté et il se déroule suivant des cycles de calculs successifs, chaque cycle fournissant une valeur de la direction et une valeur de la distance D d'un bruiteur poursuivi. Le cycle de calcul démarre à l'instant, où l'adresse de la voie du système d'écoute passive W et la valeur de l'angle a sont fournies au système, par le calculateur de poursuite 31 de la figure 3.

Les coordonnées x_{B} et y_{B} étant fonction de la voie sont stockées sous la forme réduite x/cB et y/cB dans la mémoire 64 dont la lecture est commandée par le numéro de la voie W.

Un circuit 610, par exemple une mémoire programmée recevant les valeurs de l'angle a, fournit les valeurs de sin a et de cos a, qui sont multipliés dans les circuits multiplicateurs 612 et 611 par y_{B}/c, x_{B}/c, puis les résultats partiels sont additionnés par un circuit 614 pour donner le retard grossier T₁^{G}. Le retard T₂^{G} est obtenu par l'additionneur 615 en ajoutant à T₁^{G} la quantité d/c cos a, puis T₃^{G} est obtenu par l'additionneur 616 en ajoutant à T₂^{G} la même quantité d/c cos a. La valeur d/c étant fournie par une mémoire 620. Un circuit multiplicateur 613 reçoit les valeurs de d/c et cos a.

Les retards T₁^{G}, T₂^{G}, T₃^{G} ainsi obtenus sont stockés dans une mémoire tampon 65.

Par ailleurs, les signaux reçus par les récepteurs Rₗ, R₂ et R₃, et prétraités, sont échantillonnés par les convertisseurs analogiques-numériques 61.1, 61.2 et 61.3 et stockés dans des mémoires numériques 62.1, 62.2 et 62.3. Egalement, le signal de voie Sᵥ sélectionné par le circuit 35 est stocké dans une mémoire numérique 67. Notons que dans les systèmes d'écoute passive modernes, les signaux de voies sont déjà fournis sous forme numérique. Chaque intercorrélation est calculée sur une durée de signal T grande devant le retard maximum obtenu dans la direction la plus inclinée.

Les signaux des trois récepteurs S₁, S₂ et S₃ sont stockés dans les mémoires telles que 62.i sur une tranche de durée plus grande que T. Un calcul d'adresses des échantillons lus dans ces mémoires est effectué dans le circuit 63, qui reçoit les valeurs des retards grossiers Tᵢ^{G}. Cet adressage permet de lire dans chaque mémoire une tranche de signal Si de durée T, décalée par rapport à la tranche T du signal Sᵥ du retard TG.

Le calculateur 66 met en oeuvre le calcul de la fonction d'intercorrélation entre chaque signal Si et le signal Sᵥ sur une plage de retard ± Δ T/2. A chaque décalage T, il effectue le produit des échantillons correspondant à la durée T et fournissant ainsi un « point de la fonction d'intercorrélation : 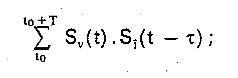 à l'instant tₒ, t étant le temps.

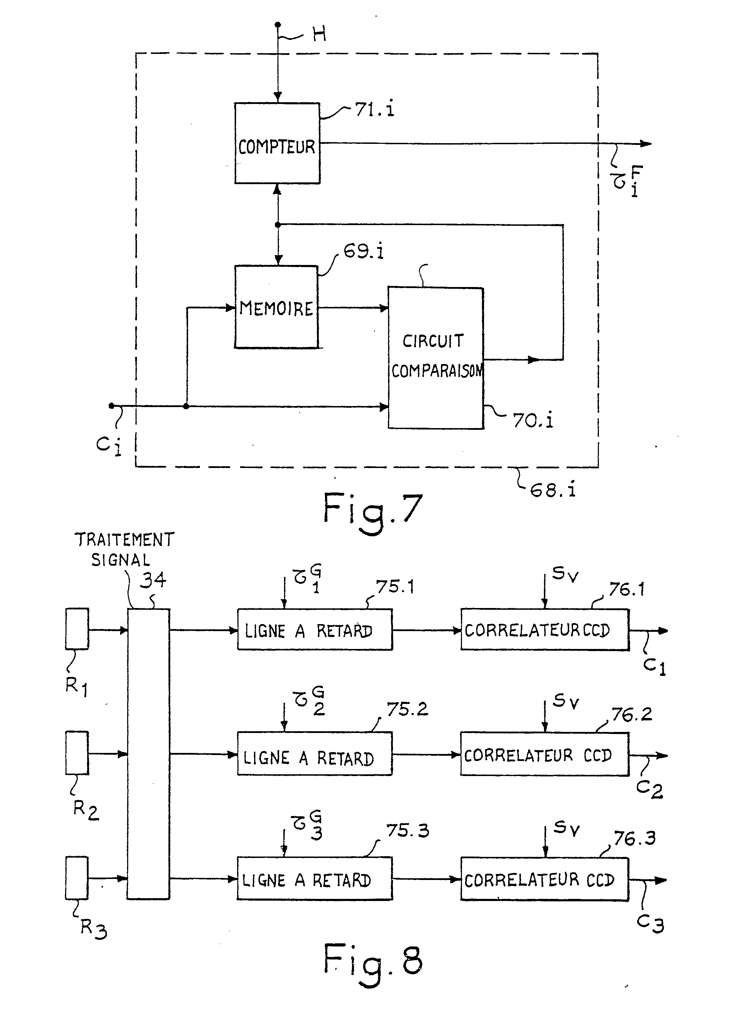

A chaque fois qu'un point de la fonction d'intercorrélation est calculé, il est envoyé dans un ensemble de circuits tel que 68.i (figure 7) mettant en œuvre la mesure du retard fin Tᵢ^{F}. Chaque point est comparé dans un comparateur 70.i au point de valeur la plus grande à cet instant stocké dans une mémoire tampon 69.i. Cette mémoire tampon ainsi qu'un circuit de comptage et de totalisation 71.i des périodes d'horloge H sont commandés par le résultat de la comparaison. Lorsque tous les points d'une fonction ont été calculés, le compteur totalisateur 71.i fournit une estimation quantifiée de Tᵢ^{F}. Le pas de quantification en _{T} est égal au pas d'échantillonnage temporel des signaux Sᵥ et Si. La valeur finale de Tᵢ^{F} est obtenue par interpolation en utilisant les échantillons de la fonction d'intercorrélation autour du maximum trouvé. Le retard grossier correspondant Tᵢ^{G} est additionné au retard fin Tᵢ^{F} dans le circuit 72.i, pour fournir la valeur du retard Tᵢ qui est envoyée dans le calculateur 80.

Cet exemple de réalisation n'est pas limitatif. Ainsi, suivant un mode de réalisation préféré, le calculateur 66 et l'ensemble de circuits 68.i constituent un seul calculateur. De plus, suivant le nombre de mémoires, d'opérateurs, et de moyens d'entrée-sortie, ce calculateur peut calculer soit séquentiellement soit simultanément les trois retards T₁, T₂, T₃. Avantageusement, ce calculateur est un circuit microprocesseur, convenablement programmé.

Suivant un autre mode de réalisation, le calculateur 66, l'ensemble de circuits 68.i et le calculateur 80 sont constitués par un seul circuit microprocesseur.

Une variante de réalisation suivant l'invention est montrée par la figure 8, les signaux des récepteurs R₁, R₂, R₃ prétraités dans les circuits 34 sont retardés analogiquement dans des lignes à retard à prises 75.1, 75.2 et 75.3 dont le choix de la prise de sortie est commandé à partir des retards grossiers Tᵢ^{G} préalablement déterminés. Chaque signal S, convenablement retardé est ensuite corrélé avec le signal de voie Sᵥ dans un corrélateur réalisé avec des circuits à transfert de charge 76.1, 76.2 et 76.3, dont le fonctionnement est analogue à un registre à décalage et permettant de réaliser un filtre transversal dont les prises sont pondérées par des échantillons du signal Sᵥ.

## Revendications

1. Système de télémétrie passive par acoustique sous-marine pour des bâtiments navals, comprenant au moins une base munie de trois récepteurs alignés (R₁, R₂ et R₃) pour recevoir des signaux émis par un bruiteur (1) à localiser situé à une distance D dans un gisement a, des moyens pour mesurer le retard Δt₁₂ du signal reçu par le premier récepteur (R₁) par rapport à celui reçu par le deuxième récepteur (R₂) et le retard Δt₂₃ du signal reçu par le deuxième récepteur (R₂) par rapport à celui reçu par le troisième récepteur (R₃), et des moyens pour calculer à partir des retards Δt₁₂ et Δt₂₃ les valeurs de a et de D, caractérisé en ce qu'il comprend en outre un système d'écoute passive (3) à voies préformées directives, des moyens (31-35) pour sélectionner la voie de ce système d'écoute passive la plus proche de la direction du bruiteur, et des moyens (381-383,39) pour mesurer les retards T₁, T₂, T₃ entre d'une part le signal de voie ainsi sélectionné et respectivement les signaux des trois récepteurs (Rᵢ, R₂, R₃) ; les moyens (40) de calcul de α et D comprenant des moyens pour calculer les retards ΔT₁₂ = T₁ - T₂ et Δt₂₃ ⁼ T₂ T₃·

2. Système selon la revendication 1, caractérisé en ce que les moyens de mesure des retards T₁, T₂, T₃ comprennent des moyens (381-383) de calcul des trois fonctions d'intercorrélation entre le signal de voie sélectionné et respectivement les signaux des trois récepteurs (R₁, R₂, R₃).

3. Système selon une quelconque des revendications 1 et 2, caractérisé en ce que les moyens de sélection de la voie du système d'écoute passive comprennent un circuit de sélection (35) recevant tous les signaux de voie et délivrant l'un d'entre eux sous la commande d'un calculateur de poursuite (31) qui calcule la voie à sélectionner à partir d'une voie initialement déterminée par un signal d'initialisation (1), en corrigeant cette détermination à partir de signaux extérieurs ( indiquant le cap et la vitesse du bâtiment et de signaux (αₒ. Dₒ) provenant des moyens de calcul (40) de a et de D lui indiquant une succession de valeurs approchées du gisement et la distance.

4. Système selon la revendication 1; caractérisé en ce que le bâtiment comprend deux bases comportant chacune trois récepteurs alignés (R₁, R₂, R₃, R'₁, R'₂, R'₃) et situées respectivement à bâbord et à tribord du bâtiment (Fig. 4), et des moyens (36) de sélection de l'une de ces bases selon la position du bruiteur ; ces moyens de sélection étant commandés par les moyens (31) de sélection de la voie du système d'écoute passive.

5. Système selon les revendications 1, 2 ou 3, caractérisé en ce que les moyens de mesures des retards T₁, T₂, T₃ comprennent des moyens (37) pour calculer à partir des données géométriques de positionnement de la base (R₁, R₂, R₃) par rapport à l'antenne (30) du système de réception passif et des indications de voie et de gisement fournies par le calculateur de poursuite (31) des valeurs grossières T₁^{G}, T₂^{G}, T₃^{G} des retards des signaux des trois récepteurs (R₁, R₂, R₃), trois corrélateurs (381-383) recevant chacun le signal de voie sélectionnée, le signal d'un récepteur et le retard grossier correspondant pour calculer la fonction d'intercorrélation entre ce signal de voie sélectionnée et.le signal du récepteur recalé en fonction du retard grossier, et un circuit (39) de mesure relié aux sorties des corrélateurs pour calculer les retards fins T₁^{F}, T₂^{F}, T₃^{F} entre les valeurs des retards grossiers et les valeurs effectives des retards de signaux reçus ; les moyens (40) de calcul de a et de D recevant ces retards grossiers et fins pour déterminer en les additionnant les retards effectifs.

## Claims

1. System for passive telemetry by submarine acoustics for naval vessels, comprising at least one base provided with three aligned receivers (R₁, R₂, R₃) for receiving signals emitted by an acoustic source (1) to be located, which is placed at a distance D in a lie a, means for measuring the delay Δt₁₂ of the signal received by the first receiver (Rᵢ) with respect to the signal received by the second receiver (R₂), and the delay Δt₂₃ of the signal received by the second receiver (R₂) with respect to the signal received by the third receiver (R₃), and means for computing from delays Δt₁₂ and Δt₂₃ the values of a and D, characterized in that it further comprises a passive listening system (3) with preformed directing channels, means (31-35) for selecting that channel of said passive listening system which is closest to the direction of said acoustic source, and means (381-383, 39) for measuring the delays T₁, T₂, T₃ between the thus selected channel signal and, respectively, the signals of said three receivers (Rᵢ, R₂, R₃) ; said means (40) for computing a and D comprising means for calculating the delays Δt₁₂ = T₁ - T₂ and ΔT₂₃ ⁼ T₂ - T₃.

2. System according to claim 1, characterized that said means for measuring delays T₁, T₂, T₃ comprise means for computing the three functions of the intercorrelation between the selected channel signal and, respectively, the signals of said three receivers (R₁, R₂, R₃).

3. System according to claim 1, characterized in that said means for selecting the channel of the passive listening system comprise a selection circuit (35) receiving all the channel signals and delivering one of the same under the control of a tracking computer (31) which calculates the channel to be selected, on the base of a channel initially determined by an initiation signal (I), by correcting this determination on the base of external signals 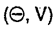 indicating the direction and speed of the vessel and on the base of signals (αₒ, Dₒ) supplied by said means (40) for computing a and D, indicating a succession of approximate values of lie and distance.

4. System according to claim 1, characterized in that the vessel comprises two bases including each three aligned receivers (R₁, R₂, R₃, R'₁, R'₂, R'₃) and located, respectively, on the port side and the starbord side of said vessel (figure 4), and means (36) for selecting either one of said bases, depending on the position of said acoustic source ; said selection means being controlled by said means (31) for selecting the channel of said passive listening system.

5. System according to claims 1, 2 or 3, characterized in that said means for measuring delays T₁, T₂, T₃ comprise means (37) for computing rough values T₁^{G}, T₂^{G}, T₃^{G} of the signals of said three receivers (R₁, R₂, R₃), on the base of the geometrical data of the position of the base (Rᵢ, R₂, R₃) with reference to the aerial (30) of the passive receiving system, and on the base of the channel and lie indications supplied by said tracking computer (31), three correlators (381-383) receiving each the selected channel signal, the signal of one receiver and the corresponding rough delay value for calculating the function of intercorrelation between said selected channel signal and the signal of the receiver which it set back in accordance with the rough delay value, and a measuring circuit (39) connected to the output terminals of the correlators for computing the fine delay values T₁^{F}, T₂^{F}, T₃^{F}, between the rough delay values and the real delays of the received signals ; said means (40) for computing a and D receiving said rough and fine delay values for determining, by adding the same, the real delay values.

## Patentansprüche

1. System für passive Telemetrie durch Unterwasserakustik, für Schiffe, umfassend wenigstens eine Basis mit drei in Reihe angeordneten Empfängern (Rᵢ, R_{z}, R₃) zum Empfang von durch eine zu ortende, in einer Lage a und einer Entfernung D befindliche Schallquelle (1) abgestrahlten Signalen, Mittel zum Messen der Verzögerung Δt₁₂ des vom ersten Empfänger (R₁) empfangenen Signals in bezug auf das vom zweiten Empfänger (R₂) empfangene, und der Verzögerung Δt₂₃ des vom zweiten Empfänger (R₂) empfangenen Signals in bezug auf das vom dritten Empfänger (R₃) empfangene, und ferner Mittel zum Berechnen der Werte von a und D aufgrund der Verzögerung Δt₁₂ und Δt₂₃, dadurch gekennzeichnet, dass es ferner ein Passivhorchsystem (3) mit vorgegebenen Richtkanälen umfasst, sowie Mittel (31-35) zum Wählen des der Richtung der Schallquelle am besten entsprechenden Kanals dieses Passivhorchsystems, und ferner Mittel (381-383, 39) zum Messen der Verzögerungswerte (T₁, T₂, T₃) zwischen dem so gewählten Kanalsignal und den jeweiligen Signalen der drei Empfänger (R₁, R₂, R₃), wobei die Mittel (40) zum Berechnen der Werte a und D Mittel zum Berechnen der Verzögerungen Ot₁₂ = T₁ - _{T2} und Δt₂₃ = T₂ - T₃ umfassen.

2. System nach Anspruch 1, dadurch gekennzeichnet, dass die Mittel zum Messen der Verzögerungen (_{Ti}, _{T2}, _{T3}) Mittel (381-383) zum Berechnen der drei Funktionen der Beziehungen zwischen dem Signal des gewählten Kanals und den jeweiligen Signalen der drei Empfänger (R₁, R₂, R₃) umfassen.

3. System nach einem der Ansprüche 1 und 2, dadurch gekennzeichnet, dass die Mittel zum Wählen des Passivhorschsystem-Kanals einen Wählkreis (35) umfassen, der sämtliche Kanalsignale empfängt und eines derselben gemäss der Steuerung durch einen Verfolgungsrechner (31) abgibt, welcher den zu wählenden Kanal berechnet aufgrund eines anfänglich durch ein Auslösesignal (I) bestimmten Kanals, derart, dass dieser Rechner diese Bestimmung aufgrund äusserer Signale (Θ, V) korrigiert, die ihm die Fahrtrichtung und die Geschwindigkeit des Schiffes melden, sowie aufgrund von Signalen (αₒ, Dₒ) die von den Mitteln (40) zum Berechnen von a und D herrühren und dem Rechner eine Reihe von Näherungswerten für die Lage und die Entfernung mitteilen.

4. System nach Anspruch 1, dadurch gekennzeichnet, dass das Schiff zwei Basen besitzt, deren jede drei in Reihe angeordnete Empfänger (R₁, R₂, R₃, R'₁, R'₂, R'₃) umfasst, wobei eine der Basen auf der Steuerbordseite und die andere auf der Backbordseite des Schiffs liegt (Figur 4) und ferner Mittel (36) vorgesehen sind, um nach Massgabe der Position der Schallquelle eine dieser Basen zu wählen, und wobei diese Wählmittel durch die Mittel (31) zum Wählen des Passivhorch-system-Kanals gesteuert werden.

5. System nach den Ansprüchen 1, 2 oder 3, dadurch gekennzeichnet, dass die Mittel zum Messen der Verzögerungen T₁, T₂, T₃ Mittel (37) zum Berechnen von Grobwerten T₁^{G}, T₂^{G}, T₃^{G} der Verzögerungen der Signale der drei Empfänger (R₁, R₂, R₃) aufgrund der geometrischen Werte der Position der Base (Rᵢ, R₂, R₃) in bezug auf die Antenne (30) des passiven Empfangssystems und aufgrund der vom Verfolgungsrechner (31) gelieferten Angaben bezüglich des Kanals und der Lage, wobei drei Korrelatoren (381-383) jeweils das Signal des gewählten Kanals, das Signal eines Empfängers und das entsprechende Grobwertsignal empfangen, um die Funktion der Beziehung zwischen diesem Kanalwählsignal und dem in Abhängigkeit vom Verzögerungsgrobwert zurückgestellten Empfängersignal zu berechnen, und ferner einen an die Ausgänge der Korrelatoren angeschlossenen Messkreis (39), der die Feinwerte T₁^{F}, T₂^{F}, T₃^{F} der Verzögerungen zwischen den Verzögerungsgrobwerten und den wirklichen Werten der Verzögerungen der empfangenen Signale berechnet, und wobei die Mittel (40) zum Berechnen von a und D diese Verzögerungsgrobwerte und feinwerte empfangen, um durch deren Addierung die wirklichen Verzögerungswerte zu bestimmen.
